# EUROPEAN PATENT APPLICATION

(11) **EP 3 110 076 A1**
(43) Date of publication of application: **28.12.2016**
(21) Application number: 16175762.0
(22) Date of filing: 22.06.2016
(51) Int. Cl.: H04L 12/28, H04W 40/02, H04L 12/721

(54) **MULTI-PATH TELECOMMUNICATIONS NETWORKS**

(30) Priority: 23.06.2015 GB 201511057
(71) Applicant: Vodafone IP Licensing Limited, Newbury, Berkshire RG14 2FN (GB)
(72) Inventor: NEWTON, Jonathan, London, W2 6BY (GB)
(74) Representative: Boult Wade Tennant

(57) **Abstract**

A telecommunications network includes a telecommunications device having a requirement to send data elements to a destination entity; and a gateway operable to communicate with the destination entity via a plurality of communication paths and to communicate with the telecommunications device; wherein the telecommunications network includes means operable to communicate at least one characteristic of respective ones of the communication paths to the telecommunications device; and wherein the telecommunications device includes means operable to select which data elements are sent via which communication path in dependence upon the characteristics of the communication paths.

## Description

### TECHNICAL FIELD

The invention relates to a telecommunications network including a telecommunications device having a requirement to send data elements to a destination entity and a gateway operable to communicate with the destination entity via a plurality of communication paths and to communicate with the telecommunications device.

### BACKGROUND TO THE INVENTION

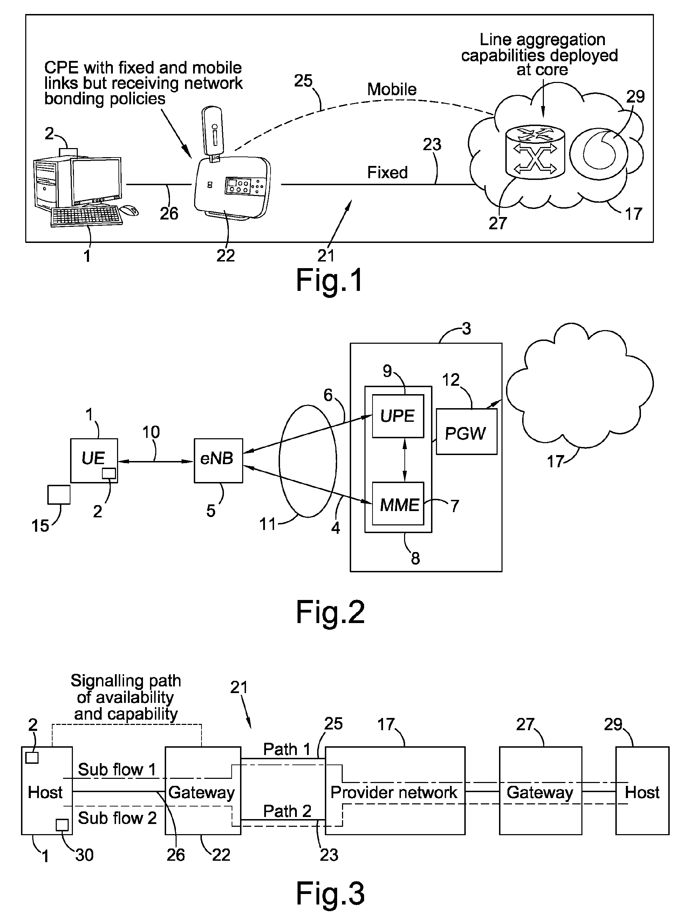

Hybrid Access or ("bonding") is a scheme for the transport of end user traffic flows over multiple access links. An example arrangement is shown in Figure 1. The end user accesses the network by operating their telecommunications device ("end host") 1, such as a mobile or cellular telecommunications device, smartphone, PDA, tablet, laptop, PC, etc. The end host 1 may host a plurality of applications 2 that provide the end user with services and that generate end user traffic comprising end user data elements. The end host 1 is connected to a gateway 22. The user gateway 22 is typically located at the end user's premises (and may be a residential gateway or Customer Premises Equipment). The end host 1 may communicate with the gateway 22 by a wireless or fixed (cable) link 26. The wireless link may be in accordance with a Wireless Local Area Standard, such as WiFi, or a known cellular radio interface telecommunications Standard, such as 2G, 3G or LTE. The wireless link 26 may be a WiFi link or a 2G Um interface, a 3G Uu interface or an LTE-Uu interface. The end user may have a plurality of end host equipment items, all of which communicate with the gateway 22. End user data elements are transmitted from the end host 1 to the gateway 22, and from there to a general destination entity 29 via multiple access links shown generally at 21, and which may comprise one or more fixed line connections 23, one or more wireless connections 25 or a mixture of both.

The fixed line connections 23 may be DSL connections, for example. The wireless connections 25 may be 2G, 3G or LTE cellular radio interface connections, for example. The wireless connections 25 may be a 2G Um interface, a 3G Uu interface or an LTE-Uu interface. The end user data elements received from the fixed line connections 23 and the wireless connections 25 may be combined at a hybrid access gateway 27 and may be transmitted to the destination entity 29 via the internet 17.

Figure 2 shows schematically the logical elements of an SAE/LTE cellular telecommunications network. Mobile terminal (End Host/UE) 1 is registered with mobile telecommunications network core 3. The mobile terminal 1 may be a handheld mobile telephone, a personal digital assistant (PDA) or a laptop or desktop personal computer - for example, equipped with a wireless datacard. The terminal 1 may host one or more applications 2 that provide the end user with services and that generate end user traffic comprising end user data elements.

The terminal 1 communicates wirelessly with the mobile telecommunications network core 3 via the radio access network (RAN) of the mobile telecommunications network core 3 over radio interface 10 (LTE-Uu interface). The RAN comprises a transceiver node (base station), an eNodeB (or eNB) 5 in this example. An eNodeB 5 performs functions generally similar to those performed by the NodeB and the radio network controller (RNC) of a 3G network. In practice there will be a multiplicity of eNodeBs 5, each serving a particular area or "cells". Each eNodeB is coupled to one or more antenna devices. The eNodeB and antenna device form a cell site. The cell site provides radio coverage to a plurality of cells, e.g. three.

Signalling in a mobile telecommunications network can be considered to be separated into "control plane" signalling and "user plane signalling". The control plane performs the required signalling, and includes the relevant application protocol and signalling bearer for transporting the application protocol messages. Among other things, the application protocol is used for setting up the radio access bearer and the radio network layer. The user plane transmits data traffic and includes data streams and data bearers for the data streams. The data streams are characterised by one or more frame protocols specific for a particular interface. Generally speaking, the user plane carries data for use by a receiving terminal - such as data that allow a voice or picture to be reproduced - and the control plane controls how data are transmitted.

A PDP (packet data protocol) context defines parameters that support the flow of data traffic to and from a mobile terminal. Among the parameters that are set are the identifier of the external packet data network with which the terminal wishes to communicate, a PDP address recognised in that network (for example, the IP address allocated to the mobile terminal), the address of the network gateway, quality of service (QoS) parameters etc.

A mobility management entity (MME) 7, which is part of the core 3, provides equivalent functions to the control plane functions of the SGSN and GGSN from the 3G architecture (Release-6). The MME 7 handles security key management. The MME 7 also provides control plane functions for mobility between LTE and GSM/UMTS networks. Communications between the eNodeB 5 are transmitted to the MME 7 via the S1-c Interface 4.

A User Plane Entity (UPE) - or Serving Gateway (SGW) - 9, which is part of the core 3, handles the user plane traffic functions from the terminal 1 which includes the IP header and payload compression and ciphering. This UPE 9 provides the equivalent functions to the user plane part of the 3G RNC and the user plane part of the 3G GGSN. Communications between the eNodeB 5 are transmitted to the UPE 9 via the S1-u Interface 6. The known 3GPP authentication procedure may be re-used in the SAE/LTE architecture shown, between the terminal 1/UE and the MME 7.

A Packet Data Network Gateway (PDN-GW / PGW 12) terminates the user plane within the core 3. The PGW 12 may then communicate user plane data to the internet 17 for onward transmission.

It should be noted that, although in Figure 2 the MME 7 and UPE 9 are shown as separate logical entities they may exist as a single physical node of the telecommunications network in gateway aGW 8.

Data are transmitted between the eNodeB 5 and the MME 7 and UPE 9 via the IP transport network 11.

The backhaul from the eNB 5 may comprise any or all of the links providing the S1-c Interface 4, the S1-u Interface 6 and the connection between the gateway aGW 8 and the mobile telecommunications network core 3.

Although only one mobile terminal 1 is shown, there will in practice be a multiplicity of mobile terminals, each of which is registered with the network core 3. Each mobile terminal (including mobile terminal 1) is provided with a respective subscriber identity module (SIM) 15. During the manufacturing process of each SIM, authentication information is stored thereon under the control of the mobile telecommunications network core 3. The mobile telecommunications network core 3 itself stores details of each of the SIMs issued under its control. In operation of the mobile telecommunications network core 3, a terminal 1 is authenticated by a SIM 15.

When a Hybrid Access Scheme of the type shown in Figure 1 is incorporated into a conventional LTE network of the type shown in Figure 2, the user gateway 22 receives communications from the end host/device 1 via the link 26. Data sent over the wireless connection 25 would then be transmitted by the Gateway 22 to the eNB 5 and from there to the core 3 in Figure 2, and then, if appropriate, via the PGW 12 to the internet 17. On the other hand, data to be transmitted from the user gateway 22 via the fixed line connection 23 will be sent via a DSL link (or other suitable fixed link, such as fibre optic cable) to the Internet 17. The data transmitted via the fixed line connection 23 and the wireless connections 25 may be for the same destination entity 29. The data may be combined at the Hybrid Access Gateway 27 for transmission to the destination entity 29.

The Hybrid Access scheme should be contrasted with other models where the end host is directly aware of multiple communication parts, such as when the end host UE/mobile terminal is simultaneously directly connected to the cellular network and a WiFi connection - one such model being 3GPP IP Flow Mobility and Seamless Offload (IFOM). IFOM allows the end host to decide the traffic placement, but requires that the end host supports the 3GPP standards and does not support the situation where there are multiple access connections between an on-site gateway and the destination entity. IFOM relies on the end host equipment to achieve the traffic placement functionality. It explicitly calls for the use of simultaneous connections to both a macro cellular network (e.g. LTE or UMTS) and WiFi.

The Hybrid Access Scheme introduces particular challenges.

Each component access link 21 of a Hybrid Access scheme may have significantly different performance capabilities. In current Hybrid Access models, the decision as to which access connection onto which to place customer traffic is performed by network equipment (typically, the user gateway 22) rather than by the end host 1. However for a number of reasons, this may not be the most appropriate decision point with example areas of difficulty below:
- High bandwidth flows (such as video) - the network can only balance these by breaking the traffic flow up to the packet or sub-packet level and sending traffic over both links, but that results in the lowest common denominator in performance as the flows need to be recombined.
- Encrypted tunnels (such as IPsec) - we cannot see into them to split the traffic appropriately.
- Complex policy management - the network is required to understand the application performance needs in order to ensure that they can be met on a per application flow basis on the links onto which the traffic will be placed.
- Multi-path aware applications or transport layers (MPTCP for example) are not aware of the multiple paths and cannot make use of them.

The end hosts 1, and the end applications 2 have a much greater understanding of the performance requirements of individual flows of user data elements, and visibility of traffic flows within encrypted tunnels. As such the end host 1 is a more appropriate place to make the correct traffic placement decision. Furthermore, the end host 1 or application 2 is potentially more able to more efficiently split large traffic flows appropriately to be delivered over multiple paths.

Multipath transport protocols such as Multi-Path TCP (MPTCP) can support the simultaneous use of multiple paths, but require visibility of the available paths (in the case of MPTCP, this is by having more than one host IP address). However, in the known Hybrid Access arrangement, the multiple paths are not visible to the end host 1. Furthermore, a multi-path transport layer, or a multipath aware application, may use complex algorithms to most appropriately balance the load over multiple paths based upon user and application requirements.

The challenge to be addressed is that the best place to balance traffic is in the end host 1, but in the Hybrid Access scenario, the end host 1 does not have visibility of the available paths or their capability to support the application needs.

There are many publications relating to MPTCP, and MPTCP proxies (for example: US 20130195004 A1), but none that address the signalling of multi-path availability and path capability to the end host.

EP2395711 A1 ("Method and router for improved updating of a routing information base") seems to relate to improving convergence in an existing network by passing additional information about network paths between network peers that would already be aware of multiple paths. There is no disclosure of communicating from a network element, such as a router, to a host information about a network path that would not ordinarily have been available to the end host.

US7080161 ("Routing information exchange") relates to providing additional performance information between networks in order to support optimisation of routing decisions where the network would already be aware of the available paths, but can make better decisions with this additional information. There is no disclosure of communication to the end host and communicating information about paths of which the end host is not otherwise aware.

US7096022 ("System and method for supporting quality of service in vertical handovers between heterogeneous networks") relates to mobile handoff/handover (where the mobile host is moving from one mobile network node to another). There is no disclosure of using multiple paths simultaneously or of the end host not directly having access to multiple network links.

### SUMMARY OF THE INVENTION

In one aspect the present invention provides a telecommunications network including a telecommunications device having a requirement to send data elements to a destination entity; and a gateway operable to communicate with the destination entity via a plurality of communication paths and to communicate with the telecommunications device; wherein the telecommunications network includes means operable to communicate at least one characteristic of respective ones of the communication paths to the telecommunications device; and wherein the telecommunications device includes means operable to select which data elements are sent via which communication path in dependence upon the characteristics of the communication paths.

The communication paths may include fixed paths and wireless paths.

The wireless path may include a cellular radio link, such as a Uu radio interface. The fixed path may be a DSL link.

The network characteristic(s) of the communication paths may include at least one of predicted latency, jitter, bandwidth and cost.

The gateway may be operable to generate the indication of at least one characteristic of respective ones of the communication paths to the telecommunications device - for example by making measurements relating to the communication paths or analysing data relating to the communication paths.

The telecommunications network may be operable to communicate the indication of at least one characteristic of respective ones of the communication paths to the telecommunications device using a suitable protocol - for example, an extensible protocol such as Universal Plug and Play, UPnP.

The gateway may include the means operable to communicate an indication of at least one characteristic of respective ones of the communication paths to the telecommunications device, or such means may be provided more centrally in the network.

This embodiment of the invention may allow the signalling of the availability of multiple paths to a Multi-Path TCP (MPTCP) application/device such that the MPTCP application/device can include those multiple paths in its placement of traffic.

The network may comprise a Hybrid Access Network

The present invention also provides a corresponding method.

According to an embodiment of the invention, the end host telecommunications device in the network is able to make traffic load balancing decisions as a network node, such as the gateway, communicates access connections available to the end host along with a set of minimum performance characteristics for those access connections prior to transmission. Advantageously, the network node communicates the availability of available access connections with a set of minimum capabilities offered by those connections to the end host; the end host is then able to take traffic load balancing decisions prior to transmission of the data elements. The embodiment is advantageous as the most appropriate node in the network, i.e. end host, is able to take the load balancing decision.

In systems comprising multiple network access channels, the embodiment provides signalling of channel availability and capacity to the terminals/end hosts for the purpose of enabling the terminals/end hosts to balance traffic flows (i.e. load balance) themselves (rather than the telecommunications network doing this).

The telecommunications network may be a mobile telecommunications network but could be a fixed (wired) telecommunications network.

### BRIEF DESCRIPTION OF THE DRAWINGS

For a better understanding of the present invention an embodiment will now be described by way of example, with reference to the accompanying drawings, where:
Figure 1 shows a known Hybrid Access arrangement;
Figure 2 shows the main elements of a known SAE/LTE 4G network; and
Figure 3 shows a Hybrid Access arrangement in accordance with an embodiment of the invention.

In the drawings like elements are generally designated with the same reference number.

### DETAILED DESCRIPTION OF EMBODIMENT OF THE INVENTION

Figure 3 shows a Hybrid Access arrangement in accordance with an embodiment of the invention. The principal components are the same as the known arrangement shown, and described above in relation to, Figure 1. An end host 1, which will typically be a user device such as a user tablet, set top box, laptop, PC or a cellular handset, communicates via the link 26. The link 26 may be a wireless link or a fixed (cable) link. Preferably, the wireless link 26 is a Wireless Local Area Standard link, such as WiFi, or may be a cellular radio interface link operating in accordance with one of the known cellular telecommunications Standards, such as 2G, 3G or LTE, as this allows the end host 1 to operated without requiring any modifications to its radio frequency (RF) functionality.

The gateway 22 receives communications from the end host 1 and passes them to a destination entity (host) 29 via a suitable network such as the internet 17 and, optionally, Hybrid Access gateway 27. Typically, the connections between the internet 17, Hybrid Access gateway 27 and destination entity 29 are fixed (cable) links, although this is not essential. As in the known arrangement described in relation to Figure 1, multiple access links 21 are provided between the gateway 22 and the internet 17. The multiple access links may comprise one or more fixed line connections 23 and one or more wireless connections 25. One or more of the wireless connections 25 may operate in accordance where known cellular radio communication Standards such as 2G, 3G or LTE. By having a wireless connection 25 that operates in accordance with such Standards, the gateway 22 is able to communicate with a base station (such as eNB 5) of conventional cellular network (see Figure 2) in the same way as a cellular telecommunication terminal is able to communicate with such a network (using the LTE-Uu interface, for example).

In accordance with the embodiment, the gateway 22 is aware of one or more characteristics of each of the multiple access links 21. Such characteristics may include predicted latency, jitter, bandwidth or cost (e.g. cost of transmitting data via the link), but may include any other characteristics, but typically providing an indication of the quality of the access link. The gateway 22 may determine these characteristics by making measurements or by receiving an indication of the characteristics from other elements of the network shown in Figure 1, 2 or 3.

Also, in accordance with the embodiment, the gateway 22 signals availability information for each of the multiple access links to the end host 1. The gateway 22 also provides the characteristics of each of the multiple access links 21 to the end host 1. The availability information and data in relation to the characteristics is preferably transmitted via the link 26. The information and data may be signalled using an existing protocol, - for example, an extensible protocol such as Universal Plug and Play (UPnP).

The availability information and data in relation to the characteristics is received by the end host 1 and may be processed by a processing capability 30 of the end host 1, such as a program or application running on the end host 1, or a feature of the end host operating system.

The end host 1 has various sources of user data elements to be sent in the uplink, such as the content of a voice call, SMS data, video data, internet browsing data, applications 2, etc. The processing capability 30 of the end host 1 is aware of these uplink data transmission requirements and is also aware of the availability information and data in relation to the characteristics of the multiple access links 21 as signalled by the gateway 22. The processing capability 30 of the end host 1 is operable to select, based on this availability information and data in relation to the characteristics, which uplink data elements should be sent by which of the multiple access links 21. The processing capability 30 of the end host 1 may perform the balancing of traffic flows between each of the multiple access links 21. The processing capability 30 of the end host 1 may also allow multi-path capable transport layers and applications to make best use of the multiple access links 21 of which they would conventionally not be aware. For example, a Multi-Path TCP (MPTCP) stack on a host 1 traditionally connected to a gateway 22, would not have knowledge of the availability of multiple paths. The signalled information allows the MPTCP stack on the host 1 to take advantage of the multiple paths available in the gateway 22.

There are multiple approaches that could be used for the end host 1 to indicate to the gateway 22 on which paths the (sub)flows of user data elements should be placed, including the dynamic creation of additional IP addressing, or the use of port number ranges. One approach is for the host 1 to identify traffic to be placed upon a specific path that is signalled to the host by the gateway 22 (along with the availability information). The Multi-Path TCP Architecture (RFC 6182), for example, states that: "Multipath TCP is primarily concerned with utilizing multiple paths end-to-end, where one or both of the end hosts are multihomed (i.e. connected to more than one network simultaneously). It may also have applications where multiple paths exist within the network and can be manipulated by an end host, such as using different port numbers with Equal Cost MultiPath (ECMP)."

It may also be the case that the gateway 22 includes firewall, Nat or proxy capability. In this case, the gateway 22 must implement functions to ensure that the (sub)flows of user data elements are correctly placed onto the relevant access link 21. In other words, the gateway 22 is able to correctly place the data onto the access link 21 identified by the end host 1 (through the method advertised in the signalling) irrespective of other functions that are included in the gateway 22.

According to the embodiment, the end host 1 now has the knowledge to be able to split its traffic in sub-flows sent via respective access links 21 in an appropriate manner to support the demands of its own applications 2. This could be in the following forms:
- Host 1 can place application flows with high performance requirements onto the highest performing links.
- Hosts 1 or applications 2 can effectively split high capacity flows across multiple links.
- Host 1 can appropriately split encrypted flows between links at the same time, ensuring that high performance applications are placed on the most appropriate link.
- The performance information provided can be input into the host's algorithms (implemented by the processing capability 30) for multi-path placement - resulting in more even balancing of traffic.
- The signalling (the signalled path availability or path parameters) can be different for each host, or can change over time, allowing more control over the traffic placement by the network based as required perhaps based upon network changes,)
- The gateway 22 may change the signalled availability to any one host based upon bandwidth changes, load, usage limits exceed etc.

The result is that the traffic balancing decision happens in the best possible place (in the end host 1) but based upon information supplied by the network that has a shared view of the access and all the end hosts using it. The end user satisfaction is improved; applications 2 have access to greater bandwidth, but under their control.

According to the embodiment, a network element (most likely the gateway 22, but it could be more centralised) is operable to signal the availability of multiple access connections to the end host 1 along with a minimal set of capability / performance characteristics for the available access connections. Depending upon the signalling protocol used, the signalling of the availability of the multiple paths may come from a more central device than the gateway that has the multiple access connections. (A central control device would in this case take on the responsibility of understanding the paths available to the end host even though it may not be responsible for forwarding any customer data.)

## Claims

1. A telecommunications network including:
a telecommunications device having a requirement to send data elements to a destination entity; and
a gateway operable to communicate with the destination entity via a plurality of communication paths and to communicate with the telecommunications device;
wherein the telecommunications network includes means operable to communicate an indication of at least one characteristic of respective ones of the communication paths to the telecommunications device; and
wherein the telecommunications device includes means operable to select which data elements are sent via which communication path in dependence upon the characteristics of the communication paths.

2. The network of claim 1, wherein the communication paths include fixed paths and wireless paths.

3. The network of claim 2, wherein the wireless path includes a cellular radio link.

4. The network of claim 1, 2 or 3, wherein the characteristic(s) of the communication paths include at least one of predicted latency, jitter, bandwidth and cost.

5. The network of claim 1, 2, 3 or 4, wherein the gateway is operable to generate the indication of at least one characteristic of respective ones of the communication paths to the telecommunications device.

6. The network of any one of claims 1 to 5, wherein the telecommunications network is operable to communicate the indication of at least one characteristic of respective ones of the communication paths to the telecommunications device using a protocol - for example, an extensible protocol such as Universal Plug and Play, UPnP.

7. The network of any one of claims 1 to 6, comprising a Hybrid Access Network.

8. The network of any one of claims 1 to 7, wherein the gateway includes said means operable to communicate an indication of at least one characteristic of respective ones of the communication paths to the telecommunications device.

9. A method of operating a telecommunications network including a telecommunications device having a requirement to send data elements to a destination entity, and a gateway operable to communicate with the destination entity via a plurality of communication paths and to communicate with the telecommunications device;
the method including:
the telecommunications network communicating an indication of at least one characteristic of respective ones of the communication paths to the telecommunications device; and
the telecommunications device selecting which data elements are sent via which communication path in dependence upon the characteristics of the communication paths.

10. The method of claim 9, wherein the communication paths include fixed paths and wireless paths.

11. The method of claim 10, wherein the wireless path includes a cellular radio link.

12. The method of claim 9, 10 or 11, wherein the characteristic(s) of the communication paths include at least one of predicted latency, jitter, bandwidth and cost.

13. The method of claim 9, 10, 11 or 12, wherein the gateway generates the indication of at least one characteristic of respective ones of the communication paths to the telecommunications device.

14. The method of any one of claims 9 to 13, wherein the telecommunications network is operable to communicate the indication of at least one characteristic of respective ones of the communication paths to the telecommunications device using a protocol, such as a protocol that is extensible with Universal Plug and Play, UPnP.

15. The method of any one of claims 9 to 14, wherein the gateway communicates the indication of at least one characteristic of respective ones of the communication paths to the telecommunications device.
